(19) **Europäisches Patentamt / European Patent Office / Office européen des brevets**

(11) **EP 2 000 828 B1**

(12) **EUROPEAN PATENT SPECIFICATION**

(45) Date of publication and mention of the grant of the patent:
**17.08.2016 Bulletin 2016/33**

(51) Int Cl.:
**G02B 26/08** (2006.01)  **H04N 9/31** (2006.01)
**G02B 27/54** (2006.01)

(21) Application number: **08016546.7**

(22) Date of filing: **22.12.2000**

(54) **Focusing system including a light modulator**

Fokussierungssystem mit Lichtmodulator

Système de focalisation comprenant un modulateur de lumière

(84) Designated Contracting States:
**AT BE CH CY DE DK ES FI FR GB GR IE IT LI LU MC NL PT SE TR**

(30) Priority: **23.12.1999 GB 9930555**

(43) Date of publication of application:
**10.12.2008 Bulletin 2008/50**

(60) Divisional application:
**10010513.9 / 2 278 379**
**10010514.7 / 2 293 134**
**10010515.4 / 2 278 385**
**10010516.2 / 2 302 439**

(62) Document number(s) of the earlier application(s) in accordance with Art. 76 EPC:
**00985693.1 / 1 244 928**

(73) Proprietor: **Longevyty AS**
**3189 Horten (NO)**

(72) Inventor: **Guscho, Yury**
**3189 Horten (NO)**

(74) Representative: **Butler, Michael John**
**Dehns**
**St Bride's House**
**10 Salisbury Square**
**London**
**EC4Y 8JD (GB)**

(56) References cited:
**JP-A- 1 140 118    JP-A- 6 027 305**
**RU-C- 2 031 624    RU-C- 2 080 641**

**SU-A- 678 519    US-A- 4 466 703**
**US-A- 4 989 958**

• ALEKHIN V A: "Calculation of the optical Parameters of a Cylindrical Schlieren Projector" SOVIET JOURNAL OF OPTICAL TECHNOLOGY., vol. 52, no. 7, July 1985 (1985-07), pages 403-405, XP000997107 AMERICAN INSTITUTE OF PHYSICS, NEW YORK, NY., US ISSN: 0038-5514

• ALEKHIN V A: "Characteristics of Multichannel Phase Reliefographic Light Modulators" AVTOMETRIYA, no. 1, 1990, pages 38-43, XP000997514 Allerton Press Inc, US

• GUSHCHO YU P ET AL: "A Large-Screen Laser Projector based on Light Modulation in a Gel-like Deformable Layer" JOURNAL OF THE MOSCOW PHYSICAL SOCIETY, vol. 7, 1997, pages 351-361, XP000997110 Allerton Press Inc, US

• ALEKHIN V A ET AL: "Optical Characteristics of Phase-Relief Recording with Signal Recording from the Side of the Substrate" OPTICAL SPECTROSCOPY (USSR), vol. 52, no. 1, January 1982 (1982-01), pages 61-63, XP000990563 OPTICAL SOCIETY OF AMERICA., US ISSN: 0030-400X

• ALEKHIN A V ET AL: "Calculation of the Value of the Luminous Efficiency when Reproducing Relief Recordings by Schlieren Optics with Circular Irises" OPTICAL SPECTROSCOPY (USSR), vol. 43, no. 5, 1977, pages 578-581, XP000990869 OPTICAL SOCIETY OF AMERICA., US ISSN: 0030-400X

EP 2 000 828 B1

**Description**

This invention relates to light modulators used in optical systems.

The invention is more particularly concerned with optical systems using light modulators which rely upon the creation of a surface relief under the action of an electric field. Such modulators have been known for many years, and for example in 1939 F. Fischer disclosed an "electro-optical transformer" using an oil layer and Schlieren optics. More recently, consideration has been given to modulators which rely upon the creation of a relief on a gel of a suitable non-polar dielectric material, such as a siloxane gel. A comprehensive discussion of such systems can be found in the book "Physics of Reliefography" by Professor Yuri Guscho published in Moscow in 1999, ISBN 5-8213-0039-8. Various proposals can be found in United States patents 4,626,920, 4,857,978 and 4,900,136, as well in Russian Federation patents 2031624, 2078478 and 2080641. Further relevant disclosures of light modulators can be found in the articles "Calculation of the optical parameters of a cylindrical Schlieren projector "by V.A. Alekhin and Y.P. Guscho, Sov J. Opt. Technol. 52(7), 1985, "characteristics of multichannel phase reliefographic hight modulators "by V.A. Alekhin, Autometriya, 1, 1990 and "Large screen laser projector based on light modulation in a gel-like deformable layer "by Y.P. Coushcho, JMPS, 7, 1997.

A light modulator which has been found to be successful comprises two deformable dielectric layers of different refractive coefficients, at least one of which is a gel. Typically the other layer may be air. Electrodes are provided either side of the layers, and reliefs are generated at the interface between the two layers in response to applied signals.

Polyorganosiloxane gels are particularly preferred for use as the gel layer in such modulators. One suitable gel is prepared by adding tetraethoxysilane, as a cross linking agent, and tin diethyldicaprylate, as a catalyst, to a solution of a $\alpha,\omega$-dihydroxypolydimethylsiloxane of general formula :

$$HO\text{-}Si(CH_3)_2O[\text{-}SiO(CH_3)_2\text{-}]_n Si(CH_3)_2 \text{-}OH$$

in a polydimethylsiloxane of general formula :

$$(CH_3)_3SiO[\text{-}SiO(CH_3)_2\text{-}]_nSi(CH_3)_3$$

Such a gel has several advantages. It is transparent, flexible, and has good optical properties. It exhibits good response times in the formation of reliefs. It is stable and can withstand high temperatures.

The present invention concerns the use of a light modulator in a novel way. Instead of being used to produce images in accordance with applied signal, the modulator is used as a more passive element in an optical system.

According to the present invention, there is provided a focusing system as defined.

In an embodiment of the invention, under the influence of signal voltages the relief surface of the deformable gel layer can be changed to alter the focal length of the lens. Thus, by changing the radius of curvature of the deformable gel layer surface, the focal length can be varied, the rate being dependent on the rate of development of a relief. Accordingly, in such an embodiment there is provided a lens whose properties can be changed rapidly. Such a lens may be used in many optical systems, such a laboratory equipment, cameras, projectors, or even spectacles.

Preferably different voltages are applied to the signal electrodes of all cells of the light modulator so that the distribution of the electric potential across the plane of the signal electrodes and at the interface between the deformable layers is not rastered, which enables space-time control of the relief shape in accordance with desired laws.

Preferably, the radial extent of the signal electrodes reduces from the innermost ring to the outermost ring.

Preferably, the following criteria are met for each cell) :

$$0.01d_1 < d_2 < d_1$$

$$d_2 > \lambda / (20 \, | \, \eta_1 - \eta_2 \, |)$$

$$| \, \eta_1 - \eta_2 \, | > 0.1$$

$$t_\rho > 0.01 \, \tau_m$$

$$0.1d_1 < L < 10\,d_1$$

in which $d_2$ is the distance between the signal electrode and the interface between the deformable layers; $d_1$ is the distance between the first electrode and the interface between the deformable layers; $\lambda$ is the wavelength of light with which the cell is used; $\eta_1$ is the refractive coefficient of one of the deformable layers; $\eta_2$ is the refractive coefficient of the other of the deformable layers; $t_\rho$ is the duration of voltage pulses applied to the signal electrodes; $\tau_m$ is the time constant of mechanical relaxation of the relief formed at the interface between the layers; and L is the minimum spatial period between electrodes in adjacent cells.

Preferably, the relief forming gel is a polyorganosiloxane gel. The preferred cross-linkable polysiloxane is $\alpha,\omega$-dihydroxypolydimethylsiloxane of general formula :

$$HO\text{-}Si(CH_3)_2O[\text{-}SiO(CH_3)_2\text{-}]_nSi(CH_3)_2\text{-}OH$$

The preferred polysiloxane is a polydimethylsiloxane of general formula :

$$(CH_3)_3SiO[\text{-}SiO(CH_3)_2\text{-}]_nSi(CH_3)_3$$

The preferred cross linking agent is tetraethoxysilane, and the preferred catalyst is tin diethyldicaprylate.

Preferably the $\alpha,\omega$-dihydroxypolydimethylsiloxane is in the polydimethylsiloxane as a 10 - 30% solution, and for example a 15% solution. Preferably, the methods use $\alpha,\omega$-dihydroxypolydimethylsiloxane having a molar mass of $(1\text{-}2)10^4$ g/mol in polydimethylsiloxane having a molar mass of $(0.6\text{-}1)\cdot10^3$ g/mol, at the 1:0.8-1:1.5 and 1:2-1:5 $\alpha,\omega$-dihydroxy-polydimethylsiloxane / tin diethyldicaprylate and $\alpha,\omega$-dihydroxypolydimethylsiloxane / tetraethoxysilane molar ratios.

Preferably, in a system in which the gel is to remain adhered to one substrate after development, there is provided between the gel and that substrate a layer of a substance which will increase adhesion of the gel to the substrate, such as a polycarboarylenesiloxane film.

For the preferred polyorganosiloxane gels, the components will be mixed together in appropriate quantities. For example, in one preferred method of preparing the specific gel mentioned above, tetraethoxysilane and tin diethyldicaprylate will be added to a 10-30% solution of $\alpha,\omega$-dihydroxypolydimethylsiloxane having a molar mass of $(1\text{-}2)\cdot10^4$ g/mol in polydimethylsiloxane having a molar mass of $(0.6\text{-}1)\cdot10^3$ g/mol, at the 1:0.8-1:1.5 and 1:2-1:5 $\alpha,\omega$-dihydroxy-polydimethylsiloxane / tin diethyldicaprylate and $\alpha,\omega$-dihydroxypolydimethylsiloxane / tetraethoxysilane molar ratios. The mixture is agitated until it thickens somewhat, and then it is poured onto a substrate. If the mixture is poured onto the substrate too soon after addition of the catalyst and cross linking agent, it may flow in an undesired fashion. If pouring is left until too close to the gel point, it will be too difficult to pour the mixture.

An embodiment of the invention will now be described by way of example and with reference to the accompanying drawings, in which :

Fig. 1 shows a cell of a light modulator with a deformable gel layer;

Fig. 2 shows a light modulator with a number of cells having deformable gel layers;

Fig. 3a shows time dependencies of the voltage at the signal electrode, at the outputs of the bias voltage and support voltage units;

Fig. 3b shows the areas demarcated with dotted lines on Fig. 3a on an enlarged scale in;

Fig. 4 shows an optical focusing system using a deformable gel layer; and

Fig. 5 shows how the signal electrodes can be made in concentric rings.

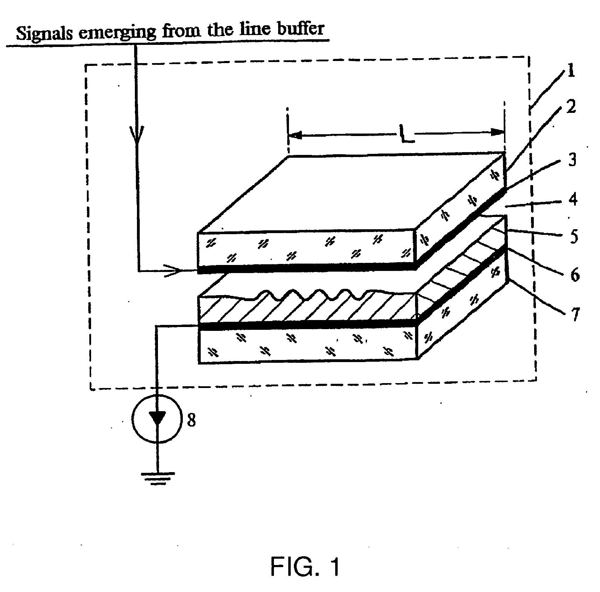

Figure 1 shows a cell (1) of a light modulator with a deformable gel layer. The cell includes a first dielectric substrate layer (7) on which is mounted a first, or support, electrode (6) followed by the gel layer (5). A signal electrode (3) mounted on a second dielectric substrate layer (2) is separated from the deformable gel layer (5) by a second deformable layer (4) which in this case is air. A support voltage unit (8) is also provided. Such a basic arrangement is described in Russian Patent 2080641 to Guscho et al.

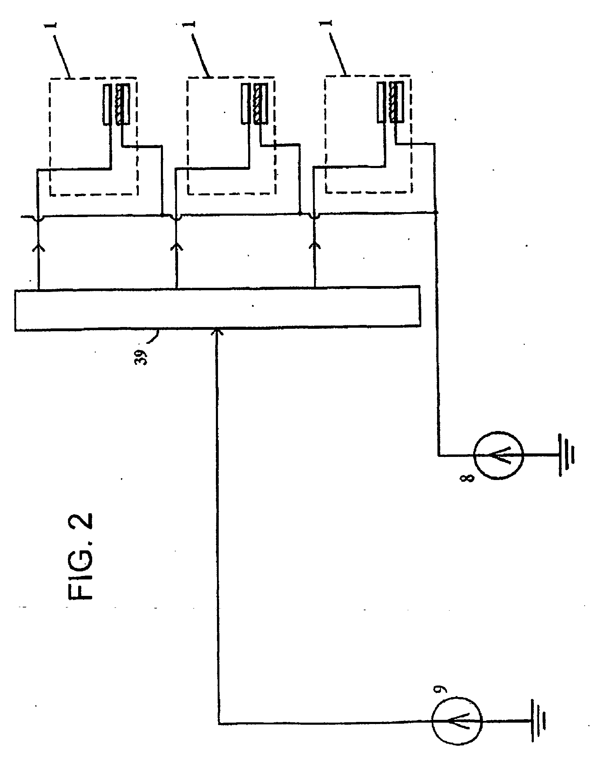

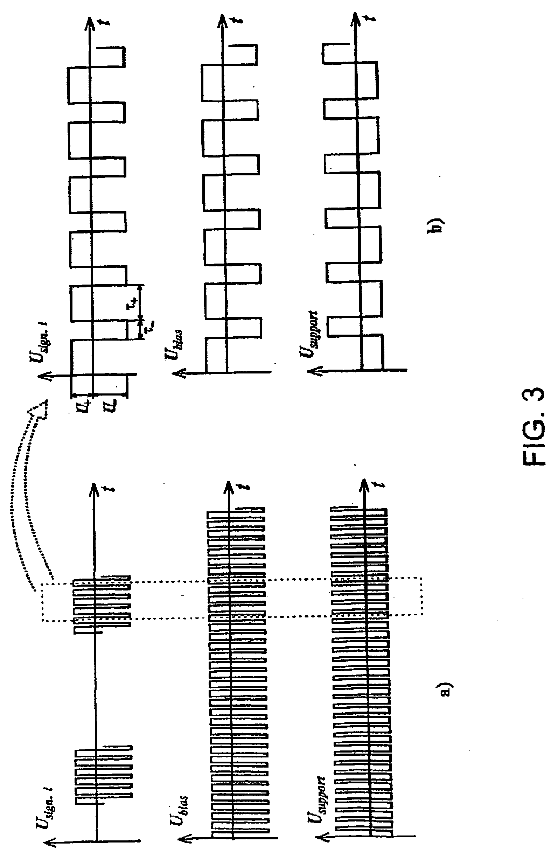

Figure 2 shows an arrangement of several such cells connected in a light modulator. A bias voltage unit (9) is also provided for the signals. Figure 3 shows time dependencies of the voltage at the $i^{th}$ signal electrode, $U_{sign.i}$, and at the outlets of the bias voltage ($U_{bias}$) and support voltage ($U_{support.}$) units. In order to eliminate the inleakage of electric charges in the deformable gel layer, rectangular pulses to be transferred to the signal electrodes, $U_{sign.i}$, are filled with high-frequency rectangular bipolar voltage. The support voltage, $U_{support}$, and the bias voltage, $U_{bias}$, are filled with the same voltage. $U_{support}$ is antiphasic, while $U_{bias}$ is synphasic to $U_{sign.i}$. In Fig. 3b, the area demarcated with a dotted line in Fig. 3a, is shown on an enlarged scale.

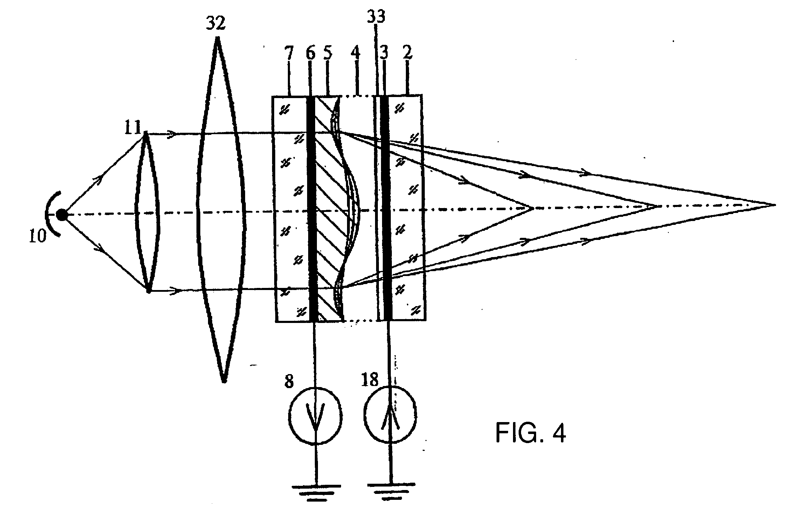

In Figure 4 there is disclosed a focusing system comprising the following components arranged in succession along the same optical axis: a light source (10), a condenser (11) and a lens (32). The system contains additionally a source of input electrical signals (18) and a transparent light modulator (14) with a deformable gel layer placed on the optical axis behind the lens (32) and consisting of the cell (1) with the deformable gel layer (5) and the support voltage unit (8). In order to protect the surface of the signal electrode (3) from dust and oxidation by the moisture present in the atmospheric air, the signal electrode (3) is coated with a dielectric layer (33). The signal electrode (3) is connected with the source of input electrical signals (18) and the support electrode (6) is connected with the support voltage unit (8). The voltages applied to the signal (3) and support (6) electrodes can be constant or alternating and at any instant of time the polarity of voltage applied to the support electrode (6) will be opposite to the polarity of voltage applied to the signal electrode (3). Under the influence of voltages applied to the signal electrode (3) the relief surface of the deformable gel layer (5) takes the shape of a lens. By changing the radius of curvature of the deformable gel layer (5) surface, the focal length can be varied, the rate of this process being dependent on the rate of development of a relief.

Different voltages may be applied to the signal electrodes of all cells (1) of the light modulator (14) so that the distribution of the electric potential across the plane of the signal electrodes (3) and at the interface between the deformable layers is not rastered, which ensures space-time control of the relief shape in accordance with a certain law.

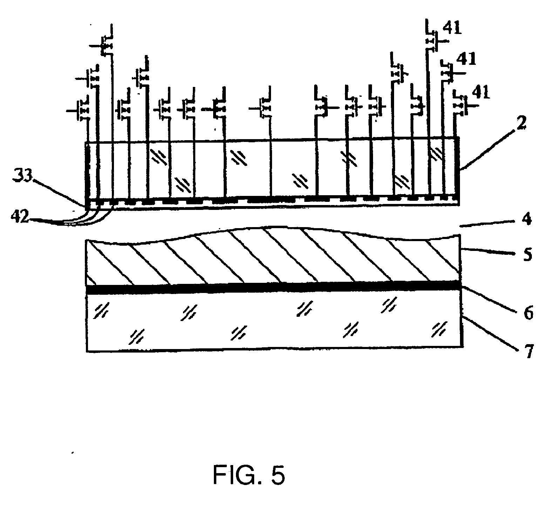

The signal electrode in the cell (1) of the light modulator (14) is in the form of concentric rings, each of the rings being connected with the outlet of its own switch device (41), as shown in Figure 5. The size of the signal electrodes may reduce from the centre towards the periphery, as shown, but for a particular relief may remain constant or increase in this direction, or be irregular.

**Claims**

1.  A focusing system including a light modulator (14) comprising a plurality of cells (1), each cell comprising two deformable dielectric layers (4, 5) which meet at an interface, at least one of which (5) is a relief forming gel, a first electrode (6) on one side of the layers and a signal electrode (3) on the other side of the layers, said focussing system further including means (18) arranged to supply signals to the signal electrodes of the cells so that a relief surface of the deformable gel layer takes the shape of a lens such that the light modulator acts as a lens, wherein the signal electrodes (3) of the cells (1) are arranged in the form of independently switchable concentric rings (42).

2.  A focussing system as claimed in claim 1, wherein the means (18) arranged to supply signals to the signal electrodes (3) of the cells (1) is arranged to vary the signals so as to vary the profile of the relief and thus alter the focal length of the lens (14) by changing the radius of curvature of the deformable gel layer surface.

3.  A focussing system as claimed in claim 1, wherein different voltages are applied to the signal electrodes of the cells so that the distribution of the electric potential across the plane of the signal electrodes and at the interface between the deformable layers is not rastered.

4.  A focussing system as claimed in claim 1, wherein the radial extent of the signal electrodes (42) reduces from the innermost ring to the outermost ring.

5.  A focussing system as claimed in any preceding claim, wherein the following criteria are met for each cell (1):

$$0.01d_1 < d_2 < d_1$$

$$d_2 > \lambda / (20 | \eta_1 - \eta_2 | )$$

$$| \eta_1 - \eta_2 | > 0.1$$

$$t_\rho > 0.01 \, \tau_m$$

$$0.1 d_1 < L < 10 \, d_1$$

in which $d_2$ is the distance between the signal electrode (3) and the interface between the deformable layers (4, 5) ; $d_1$ is the distance between the first electrode (6) and the interface between the deformable layers; $\lambda$ is the wavelength of light with which the cell is used; $\eta_1$ is the refractive coefficient of one of the deformable layers; $\eta_2$ is the refractive coefficient of the other of the deformable layers; $t_\rho$ is the duration of voltage pulses applied to the signal electrodes; $\tau_m$ is the time constant of mechanical relaxation of the relief formed at the interface between the layers; and L is the minimum spatial period between electrodes in adjacent cells.

6. A focussing system as claimed in any preceding claim, wherein the relief forming gel is a polyorganosiloxane gel.

**Patentansprüche**

1. Ein Fokussierungssystem mit einem Lichtmodulator (14), umfassend eine Mehrzahl von Zellen (1), jede Zelle umfasst zwei verformbare dielektrische Schichten (4, 5), die sich an einer Grenzfläche treffen, mindestens eine davon (5) ist ein Reliefbildendes Gel, eine erste Elektrode (6) auf einer Seite von den Schichten und eine Signalelektrode (3) auf der anderen Seite von den Schichten, besagtes Fokussierungssystem schließt des Weiteren Mittel (18) ein, welche arrangiert sind um Signale zu den Signalelektroden von den Zellen zu liefern, so dass eine Reliefoberfläche von der verformbaren Gelschicht die Form einer Linse einnimmt, so dass der Lichtmodulator als eine Linse funktioniert, wobei die Signalelektroden (3) von den Zellen (1) in der Form von unabhängigen, schaltbaren, konzentrischen Ringen (42) arrangiert sind.

2. Ein Fokussierungssystem wie in Anspruch 1 beansprucht, wobei die Mittel (18), arrangiert um Signale zu den Signalelektroden (3) von den Zellen (1) zu liefern, arrangiert sind, um die Signale zu variieren, um das Profil von dem Relief zu variieren und somit die Brennweite von der Linse (14) durch Veränderung des Krümmungsradius von der verformbaren Geloberfläche zu verändern.

3. Ein Fokussierungssystem wie in Anspruch 1 beansprucht, wobei verschiedene Spannungen an die Signalelektroden von den Zellen angelegt werden, so dass die Verteilung von dem elektrischen Potential über die Ebene von den Signalelektroden und an der Grenzfläche zwischen den verformbaren Schichten nicht gerastert ist.

4. Ein Fokussierungssystem wie in Anspruch 1 beansprucht, wobei die radiale Erstreckung von den Signalelektroden (42) sich von dem innersten hin zum äußersten Ring reduziert.

5. Ein Fokussierungssystem wie in irgendeinem vorherigen Anspruch beansprucht, wobei die folgenden Kriterien für jede Zelle (1) erfüllt sind:

$$0{,}01 \, d_1 < d_2 < d_1$$

$$d_2 > \lambda / (20 \, | \eta_1 - \eta_2 | )$$

$$| \eta_1 - \eta_2 | > 0{,}1$$

$$t_\rho > 0{,}01 \, \tau_m$$

$$0{,}1\,d_1 < L < 10\,d_1$$

in welchen $d_2$ die Distanz zwischen den Signalelektroden (3) und der Grenzfläche zwischen den verformbaren Schichten (4, 5) ist; $d_1$ der Abstand zwischen der ersten Elektrode (6) und der Grenzfläche zwischen den verformbaren Schichten ist; A ist die Wellenlänge von Licht mit welchem die Zelle benutzt wird; $\eta_1$ ist der lichtbrechende Koeffizient von einer von den verformbaren Schichten; $n_2$ ist der lichtbrechende Koeffizient von der anderen von den verformbaren Schichten; $t_\rho$ ist die Länge von Spannungsimpulsen, welche an die Signalelektroden angelegt werden; $\tau_m$ ist die Zeitkonstante von mechanischer Entspannung von dem Relief, welches bei der Grenzfläche zwischen den Schichten geformt wird; und L ist die minimale Raumperiode zwischen Elektroden in benachbarten Zellen.

6. Ein Fokussierungssystem wie in irgendeinem vorherigen Anspruch beansprucht, wobei das Reliefbildende Gel ein Polyorganosiloxan-Gel ist.

**Revendications**

1. Système de focalisation comprenant un modulateur de lumière (14) comprenant une pluralité de cellules (1), chaque cellule comprenant deux couches diélectriques déformables (4, 5) qui se rencontrent à une interface, au moins l'une d'entre elles (5) étant un gel de formation de relief, une première électrode (6) d'un côté des couches et une électrode de signal (3) de l'autre côté des couches, ledit système de focalisation comprenant en outre des moyens (18) agencés pour fournir des signaux aux électrodes de signal des cellules de manière qu'une surface de relief de la couche de gel déformable prenne la forme d'une lentille de manière que le modulateur de lumière agisse comme une lentille, dans lequel les électrodes de signal (3) des cellules (1) sont agencées sous la forme d'anneaux concentriques commutables de manière indépendante (42).

2. Système de focalisation selon la revendication 1, dans lequel les moyens (18) agencés pour fournir des signaux aux électrodes de signal (3) des cellules (1) sont agencés pour faire varier les signaux de manière à faire varier le profil du relief et modifier ainsi la longueur focale de la lentille (14) en changeant le rayon de courbure de la surface de couche de gel déformable.

3. Système de focalisation selon la revendication 1, dans lequel des tensions différentes sont appliquées aux électrodes de signal des cellules de manière que la distribution du potentiel électrique à travers le plan des électrodes de signal et à l'interface entre les couches déformables ne soit pas tramé.

4. Système de focalisation selon la revendication 1, dans lequel l'étendue radiale des électrodes de signal (42) diminue de l'anneau le plus interne à l'anneau le plus externe.

5. Système de focalisation selon une quelconque revendication précédente, dans lequel les critères suivants sont remplis pour chaque cellule (1) :

$$0{,}01\,d_1 < d_2 < d_1$$

$$d_2 > \lambda / (20\,|\eta_1 - \eta_2|)$$

$$|\eta_1 - \eta_2| > 0{,}1$$

$$t_\rho > 0{,}01\,\tau_m$$

$$0,1\ d_1 < L < 10\ d_1$$

où $d_2$ est la distance entre l'électrode de signal (3) et l'interface entre les couches déformables (4, 5) ; $d_1$ est la distance entre la première électrode (6) et l'interface entre les couches déformables ; $\lambda$ est la longueur d'onde de lumière avec laquelle la cellule est utilisée ; $\eta_1$ est le coefficient de réfraction de l'une des couches déformables ; $\eta_2$ est le coefficient de réfraction de l'autre des couches déformables ; $t_\rho$ est la durée des impulsions de tension appliquées aux électrodes de signal ; $\tau_m$ est la constante de temps du relâchement mécanique du relief formé à l'interface entre les couches ; et L est la période spatiale minimale entre des électrodes dans des cellules adjacentes.

6. Système de focalisation selon une quelconque revendication précédente, dans lequel le gel de formation de relief est un gel de polyorganosiloxane.

Signals emerging from the line buffer

FIG. 1

FIG. 2

FIG. 3

EP 2 000 828 B1

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4626920 A
- US 4857978 A
- US 4900136 A
- RU 2031624
- RU 2078478
- RU 2080641

### Non-patent literature cited in the description

- **F. FISCHER.** *electro-optical transformer,* 1939
- **PROFESSOR YURI GUSCHO.** Physics of Reliefography. 1999
- **V.A. ALEKHIN ; Y.P. GUSCHO.** Calculation of the optical parameters of a cylindrical Schlieren projector. *Sov J. Opt. Technol.,* 1985, vol. 52 (7
- **V.A. ALEKHIN.** characteristics of multichannel phase reliefographic hight modulators. *Autometriya,* 1990, 1
- **Y.P. COUSHCHO.** Large screen laser projector based on light modulation in a gel-like deformable layer. *JMPS,* 1997, 7